# FASCICULE DE BREVET EUROPEEN

(11) **EP 3 375 740 B1**
(45) Date de publication et mention de la délivrance du brevet: **07.08.2019**
(21) Numéro de dépôt: 18156040.0
(22) Date de dépôt: 09.02.2018
(51) Int. Cl.: B07C 3/06, B65G 47/64, B65G 47/96, B65H 29/16, B07C 1/16, B65H 29/58, B07C 3/08

(54) **CONVOYEUR DE TRI À VOLETS PIVOTANTS ET INSTALLATION DE TRI CORRESPONDANTE**
SORTIERFÖRDERER MIT SCHWENKKLAPPEN UND DAZUGEHÖRIGE SORTIERANLAGE
SORTING CONVEYOR HAVING PIVOTING FLAPS AND CORRESPONDING SORTING INSTALLATION

(30) Priorité: 17.03.2017 FR 1752184
(43) Date de publication de la demande: 19.09.2018
(73) Titulaire: Solystic, 92220 Bagneux (FR)
(72) Inventeur: CHAPELET, Jacques, 26800 PORTE LES VALENCE (FR); CHIFFLET, Raymond, 07500 GUILHERAND GRANGES (FR); PANO, Damien, 26000 VALENCE (FR)
(74) Mandataire: Prugneau, Philippe

(56) Documents cités:
- WO-A1-93/01007
- DE-A1- 19 963 021
- FR-A1- 2 481 959
- US-A- 4 852 715

## Description

### Domaine technique

L'invention concerne un convoyeur de tri d'objets de type colis postal à volets pivotants pour évacuer les objets vers des sorties de tri appropriées.

### Technique antérieure

Une installation de tri pour trier des colis postaux comprend généralement une entrée d'alimentation en colis et un convoyeur de tri qui transporte en série et à plat les colis provenant de l'entrée d'alimentation.

Le convoyeur de tri est généralement aménagé pour que son trajet de convoyage longe des sorties de tri dans lesquelles doivent être triés les colis.

Ce type de convoyeur est habituellement équipé de volets pivotants, de types décrits dans les documents WO93/01007, DE19963021, FR2481959 et US4852715, conçus pour évacuer les colis dans les sorties de tri disposées en-dessous.

Une unité de contrôle/commande pilote alors l'ouverture des volets en fonction d'une indication de tri apposée sur chaque colis récupérée en mémoire et correspondant à la sortie de tri dans laquelle chaque objet doit être trié.

L'amplitude d'ouverture des volets est constante par l'utilisation d'un actionneur de type bielle-manivelle.

Ainsi, pour éviter les bourrages de colis d'épaisseurs et de formes hétérogènes au niveau des sorties de tri, l'amplitude d'ouverture des volets est fixée à son maximum.

Cependant, les ouvertures répétées à amplitude maximale génèrent de fortes vibrations sur les volets entraînant à la fois une usure prématurée des bielles manivelles et d'importantes nuisances sonores.

L'ouverture à amplitude maximale des volets nécessite également un couple moteur important pour actionner les bielles manivelles ce qui augmente de facto la consommation électrique et le temps d'ouverture.

### Exposé de l'invention

Le but de l'invention est donc de remédier à ces inconvénients.

A cet effet, l'invention a donc pour objet un convoyeur de tri à volets pivotants pour trier des objets de type colis postaux dans des sorties de tri en fonction d'une indication de tri apposée sur lesdits objets, ledit convoyeur comprenant une unité de contrôle/commande conçue pour commander le pivotement de chaque volet entre une position fermée dans laquelle le volet forme une portion de convoyage apte à convoyer un objet dans une certaine direction de convoyage, et une position ouverte dans laquelle le volet interrompt le convoyage d'un objet sur ledit convoyeur pour le dévier vers une sortie de tri appropriée, ladite unité de contrôle/commande étant agencée pour récupérer en mémoire une donnée indicative d'une certaine épaisseur dudit objet à dévier et pour commander en retour le pivotement du volet en position ouverte selon une certaine amplitude d'ouverture déterminée en fonction de ladite donnée d'épaisseur de l'objet à dévier, caractérisé en ce que le convoyeur de tri comprend au moins une courroie crantée accrochée à chaque volet pour le faire pivoter autour d'un axe de rotation, ladite courroie étant entrainée en rotation par un moteur piloté par l'unité de contrôle/commande.

L'idée à la base de l'invention consiste à faire varier l'amplitude d'ouverture des volets en fonction des données d'épaisseur des objets à évacuer et plus particulièrement à réduire l'amplitude d'ouverture des volets pour les objets de faible épaisseur, par exemple pour des colis de l'ordre de quelques millimètres à une centaine de millimètres d'épaisseur.

Non seulement, les vibrations sont réduites mais le gain de temps obtenu lors des ouvertures réduites des volets permet un convoyage plus homogène (le pli n'est pas perturbé par une ouverture trop importante).

De manière avantageuse, une faible amplitude d'ouverture réduit les risques de projection hors du convoyeur d'un objet en amont encore convoyé sur le volet en cours de pivotement, également appelé « effet rebond ». Cette variation d'amplitude d'ouverture est particulièrement utile pour les objets de petites tailles souvent plus légers et donc plus sujets à l'effet rebond.

La machine de tri selon l'invention peut également présenter les particularités suivantes :
- au moins un volet est pivotant vers l'amont et le haut par rapport à ladite direction de convoyage ;
- au moins un volet est pivotant vers l'aval et le bas par rapport à ladite direction de convoyage ;
- un volet pivotant vers l'aval et le bas est disposé en amont et de manière adjacente à un volet pivotant vers l'amont et le haut par rapport à ladite direction de convoyage et en ce que ladite unité de contrôle/commande est conçue pour commander le pivotement simultané des deux volets entre les positions d'ouverture et de fermeture ;

- chaque volet comprend un tapis roulant revêtu d'un matériau adhérent pour les objets ;
- l'amplitude d'ouverture d'un volet en position ouverte est comprise entre 5° et 30°.

L'invention s'étend également à une installation de tri comprenant une entrée d'alimentation en objets, des sorties de tri dans lesquelles les objets sont triés et un convoyeur de tri à volets pivotants pour mettre en série à plat les objets de l'entrée d'alimentation jusqu'aux sorties de tri appropriées dont l'amplitude d'ouverture des volets est modifiée en fonction de l'épaisseur des objets à évacuer. L'installation comprend également un capteur disposé en amont des volets pour mesurer l'épaisseur des objets.

Une telle installation de tri permet de traiter rapidement un grand nombre d'objets hétérogènes tout en remédiant aux problèmes précités. L'installation de tri est particulièrement avantageuse pour trier des colis postaux ou des objets d'un centre logistique, type plateforme de vente en ligne.

### Présentation sommaire des dessins

La présente invention sera mieux comprise et d'autres avantages apparaîtront à la lecture de la description qui suit et des dessins annexés :
- la figure 1 représente de façon très schématique une installation de tri selon l'invention ;
- la figure 2 illustre de façon schématique une portion d'un convoyeur de tri selon l'invention avec des volets pivotants en position fermée ;
- la figure 3 illustre de façon schématique une portion d'un convoyeur de tri selon l'invention avec des volets pivotants dont un volet en position ouverte selon une certaine amplitude d'ouverture ;

- la figure 4 illustre de façon schématique une portion d'un convoyeur de tri selon l'invention avec des volets pivotants dont un volet en position ouverte selon une autre amplitude d'ouverture ;
- la figure 5 illustre de façon schématique une portion d'un convoyeur de tri selon l'invention avec des volets pivotants dont deux volets en position ouverte ;
- la figure 6 illustre de façon schématique un agrandissement d'une portion du convoyeur de tri avec un volet pivotant en position ouverte dans la même amplitude d'ouverture que le volet de la figure 3.

### Description d'un mode de réalisation

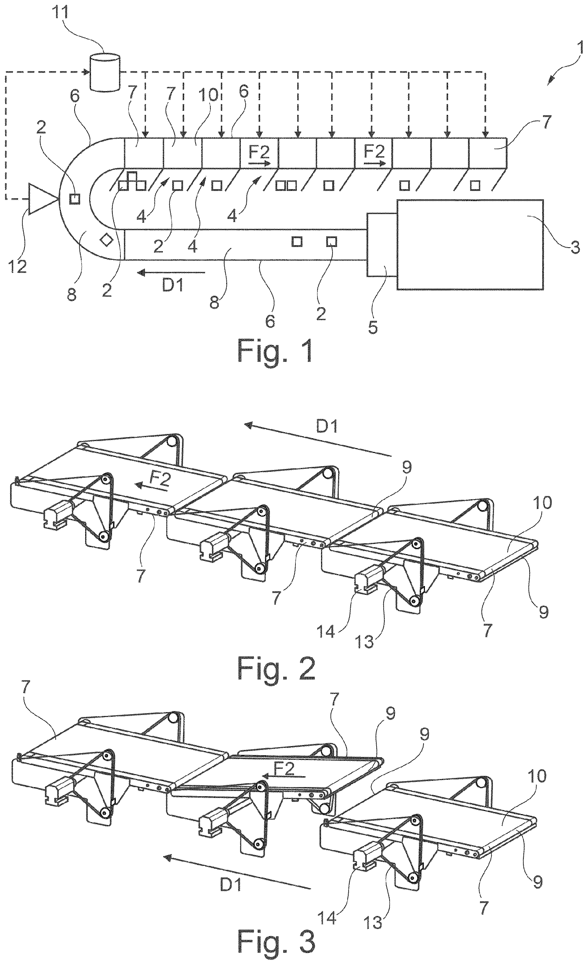

Sur la figure 1 on a représenté une installation de tri 1 selon l'invention conçue pour trier des objets 2 de type colis postaux.

L'installation de tri 1 comprend une entrée d'alimentation 3 en objets 2, des sorties de tri 4, un système 5 de lecture d'adresse de distribution représentative d'une indication de tri d'un objet 2 et un convoyeur de tri 6 à volets pivotants 7 sur lequel des objets 2 sont mis en série à plat de l'entrée d'alimentation 3 jusqu'aux sorties de tri 4 selon une certaine direction de convoyage D1.

Une portion du convoyeur de tri 6 selon l'invention est représentée sur les figures 2 à 4 dans laquelle trois volets 7 pivotants sont disposés de manière adjacente. Il est entendu que la portion de convoyeur représentée peut être prolongée d'un côté comme de l'autre par d'autres volets 7 pivotants ou par des bandes transporteuses 8 habituellement utilisées pour le convoyage d'objets 2, telles que représentées sur la figure 1.

Le nombre de volets 7 adjacents peut varier selon les besoins et en fonction des emplacements des sorties de tri 4 le long du convoyeur de tri 6.

Chaque volet 7 est ici pivotant entre une position fermée, visible sur la figure 2, dans laquelle il forme une portion de convoyage apte à convoyer les objets 2 dans la direction de convoyage D1 et une position ouverte, visible sur les figures 3, 4 et 6 dans laquelle le volet 7 interrompt le convoyage d'un objet 2 sur le convoyeur 6 pour le dévier vers une sortie de tri 4 appropriée.

En position fermée, les extrémités 9 des volets 7 viennent à fleur d'autres volets en position fermée pour former un chemin de convoyage suivant la direction de convoyage D1.

Les volets 7 comprennent également un tapis roulant 10, revêtu d'une matière adhérente leur permettant de convoyer les objets 2 dans selon un sens de convoyage F2, de la même manière que les bandes transporteuses 8 lorsqu'ils sont en position fermée. En outre, lorsque les volets 7 sont en position ouverte la matière adhérente freine le glissement des objets 2.

Le tapis roulant 10 d'un volet 7 fonctionne généralement en continu indépendamment du fonctionnement du pivotement du volet.

Chaque volet 7 est également disposé au-dessus d'une sortie de tri 4 qui lui est allouée.

Ainsi, un volet 7 en position ouverte permet de dévier un objet 2 directement dans la sortie de tri 4 dans laquelle il doit être trié.

Une rampe ou un système de convoyage secondaire pourra également être agencé sous le volet pour guider l'objet dévié jusqu'à la sortie de tri appropriée.

Le choix de la sortie de tri 4 dans laquelle un objet 2 doit être trié est défini par une unité de contrôle/commande 11 du convoyeur 6 sur la base d'une indication de tri apposée sur l'objet 2 à évacuer. Cette indication de tri devra être déterminée en amont des volets 7 par le système 5 de lecture, par exemple un système de lecture d'adresse type OCR dans le cas du tri postal.

L'ouverture d'un volet 7 est ainsi pilotée par l'unité de contrôle/commande 11 pour évacuer un objet 2 dans une sortie de tri 4 appropriée.

L'unité de contrôle/commande 11 est en outre conçue pour commander le pivotement du volet 7 en position ouverte selon une amplitude d'ouverture déterminée en fonction d'une donnée d'épaisseur de l'objet 2 à dévier déjà en mémoire de l'unité.

Pour cela, un capteur d'épaisseur 12, par exemple un capteur laser, d'objets 2 tel que représenté sur la figure 1, est disposé en amont des volets 7 sur une section à bandes transporteuses 8 qui transporte les objets 2 à plat en série entre les volets 7 et l'entrée d'alimentation 2 de l'installation de tri 1. Le capteur 12 est conçu pour produire des données sur les épaisseurs des objets 2 et pour les transmettre à l'unité de contrôle/commande 11 qui les stocke en mémoire.

La grande majorité des objets 2 nécessite une ouverture des volets selon une amplitude comprise entre 5° et 30°.

L'unité de contrôle/commande peut également être configurée pour piloter le volet selon plusieurs amplitudes d'ouvertures prédéterminées, comme par exemple 5°, 10°, 20° et 30°. Cette utilisation par paliers simplifie et accélère le traitement de l'unité de contrôle/commande.

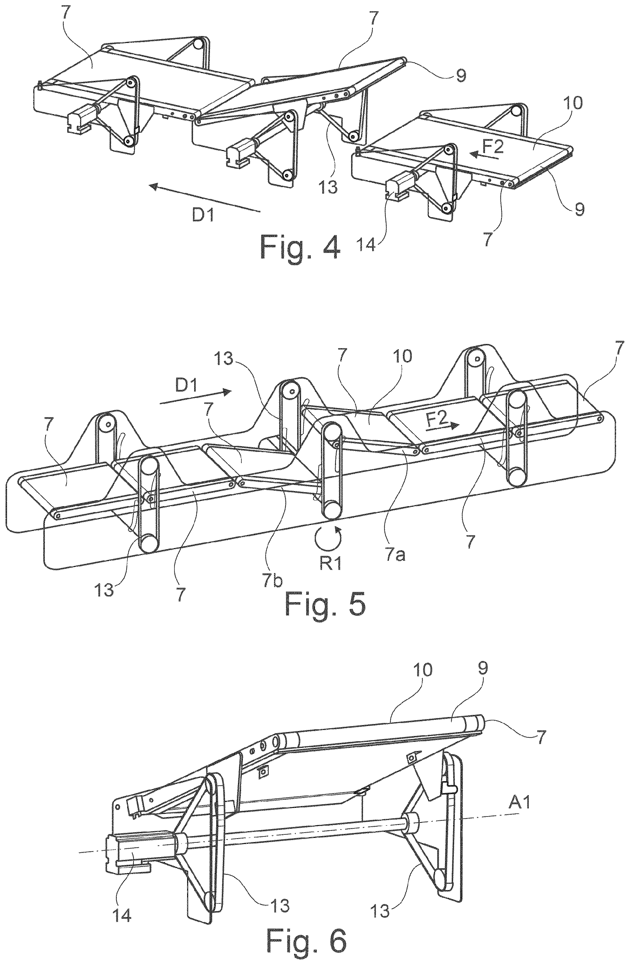

La figure 3 représente ici un volet 7 avec une amplitude d'ouverture de 10° et la figure 4 représente un volet 7 avec une amplitude d'ouverture de 20°.

Chaque volet 7, tel que représenté sur la figure 6, est ici entrainé en pivotement autour d'un axe A1 à l'aide d'une courroie crantée 13 qui elle-même est mise en rotation par un moteur 14. Le moteur est agencé pour fonctionner dans les deux sens de rotation selon un ordre de la commande de l'unité de contrôle/commande 11.

L'utilisation d'une courroie crantée 13 simplifie ici la gestion du pilotage du moteur 14 par l'unité de contrôle/commande 11 et réduit les efforts du moteur 14 par rapport à l'utilisation de bielles manivelles.

Des moteurs 14 de type « pas a pas » ou « brushless » sont généralement utilisés.

Sur la figure 5, on a représenté un agencement particulier de l'invention comprenant plusieurs volets pivotants 7 dont un volet « UP » 7a pivotant vers l'amont et le haut par rapport à la direction de convoyage D1, disposé ici en amont et de manière adjacente à un volet « DOWN » 7b pivotant vers l'aval et le bas par rapport à la direction de convoyage D1.

Les volets 7a et 7b de la figure 5 ont une taille approximativement deux fois inférieure au volet 7 des figures 2, 3, 4 et 6 ce qui diminue la course des masses des volets par deux.

Ainsi, le poids réduit des deux volets 7a,7b permet d'équilibrer les masses sur brin des courroies crantées 13 et de gagner en couple moteur.

Une seule courroie crantée 13 attachée aux extrémités 9 adjacentes des deux volets 7a,7b suffit à actionner leur pivotement. Sans restreindre la portée de l'invention, une seconde courroie peut également être disposée de l'autre côté du volet sur le même axe A1 entrainé par le moteur 14.

Le mouvement en rotation dans le sens de la flèche R1 de la courroie permet de faire pivoter respectivement chaque volet 7a,7b vers le haut et vers le bas.

Avec cette configuration de volets 7, l'unité de contrôle/commande 11 est paramétrée pour commander le pivotement simultané des deux volets 7a,7b entre les positions d'ouverture et de fermeture.

Cette configuration d'ouverture simultanée des volets 7a,7b permet avantageusement de diminuer encore l'amplitude d'ouverture des volets 7 pour les objets 2 de faibles et de grandes épaisseurs. L'effet rebond sur un objet 2 présent sur le volet UP 7a qui pivote vers le haut est ainsi encore plus diminué.

Le fonctionnement d'une installation de tri 1 selon l'invention avec un convoyeur de tri tel représenté sur la figure 5 est le suivant :
Un objet 2 stocké en vrac dans l'entrée d'alimentation est mis en série à plat sur un convoyeur de tri 6. Les bandes transporteuses 8 du convoyeur 6 transportent l'objet selon la direction de convoyage D1 de sorte que l'objet passe devant le détecteur d'épaisseur 12. Une fois l'objet 2 arrivé sur un volet pivotant situé au-dessus de la sortie de tri dans laquelle il doit être trié, l'unité 11 commande l'ouverture des volets 7b,7a simultanément selon une amplitude d'ouverture entre les deux volets sensiblement supérieure à l'épaisseur de l'objet préalablement détectée. L'objet sur le volet 7b est ainsi entrainé par le tapis roulant 10 dans la sortie de tri appropriée.

## Revendications

1. Convoyeur de tri (6) à volets pivotants (7) pour trier des objets (2) de type colis postaux dans des sorties de tri (4) en fonction d'une indication de tri apposée sur lesdits objets, ledit convoyeur comprenant une unité de contrôle/commande (11) conçue pour commander le pivotement de chaque volet (7) entre une position fermée dans laquelle le volet forme une portion de convoyage apte à convoyer un objet dans une certaine direction de convoyage (D1), et une position ouverte dans laquelle le volet interrompt le convoyage d'un objet sur ledit convoyeur pour le dévier vers une sortie de tri (4) appropriée, ladite unité de contrôle/commande (11) étant agencée pour récupérer en mémoire une donnée indicative d'une certaine épaisseur dudit objet (2) à dévier et pour commander en retour le pivotement du volet en position ouverte selon une certaine amplitude d'ouverture déterminée en fonction de ladite donnée d'épaisseur de l'objet à dévier, **caractérisé en ce que** le convoyeur de tri comprend au moins une courroie crantée (13) accrochée à chaque volet (7) pour le faire pivoter autour d'un axe de rotation (A1), ladite courroie étant entrainée en rotation par un moteur (14) piloté par l'unité de contrôle/commande (11).

2. Convoyeur de tri (6) à volets pivotants (7) selon la revendication 1, **caractérisé en ce qu'**au moins un volet (7a) est pivotant vers l'amont et le haut par rapport à ladite direction de convoyage (D1).

3. Convoyeur de tri (6) à volets pivotants (7) selon la revendication 1, **caractérisé en ce qu'**au moins un volet (7b) est pivotant vers l'aval et le bas par rapport à ladite direction de convoyage (D1).

4. Convoyeur de tri (6) à volets pivotants (7) selon les revendications 2 et 3, **caractérisé en ce qu'**un volet pivotant (7b) vers l'aval et le bas est disposé en amont et de manière adjacente à un volet pivotant (7a) vers l'amont et le haut par rapport à ladite direction de convoyage (D1) et **en ce que** ladite unité de contrôle/commande (11) est conçue pour commander le pivotement simultané des deux volets (7a,7b) entre les positions d'ouverture et de fermeture.

5. Convoyeur de tri (6) à volets pivotants (7) selon l'une des revendications précédentes, **caractérisé en ce que** chaque volet comprend un tapis roulant (10) revêtu d'un matériau adhérent pour les objets (2).

6. Convoyeur de tri (6) à volets pivotants (7) selon l'une des revendications précédentes, **caractérisé en ce que** l'amplitude d'ouverture d'un volet (7) en position ouverte est comprise entre 5° et 30°.

7. Installation de tri (1) comprenant une entrée d'alimentation (3) en objets (2) et des sorties de tri (4) dans lesquelles lesdits objets sont triés, **caractérisée en ce qu'**elle comprend en outre un convoyeur de tri (6) à volets pivotants (7) selon l'une quelconque des revendications précédentes pour mettre en série à plat lesdits objets (2) de l'entrée d'alimentation jusqu'aux sorties de tri appropriées.

8. Installation de tri selon la revendication 7, **caractérisée en ce qu'**elle comprend un capteur (12) disposé en amont desdits volets (7) pour mesurer l'épaisseur des objets (2).

## Patentansprüche

1. Sortierförderer (6) mit schwenkbaren Klappen (7) zum Sortieren von Gegenständen (2) des Typ postalisches Frachtstück in Sortierausgängen (4) in Abhängigkeit einer auf den Gegenständen angebrachten Sortierangabe, wobei der Förderer eine Regel-/Steuereinheit (11) umfasst, die ausgebildet ist zum Steuern der Verschwenkung jeder Klappe (7) zwischen einer geschlossenen Position, in der die Klappe einen Förderabschnitt bildet, der in der Lage ist, einen Gegenstand in eine bestimmte Förderrichtung (D1) zu fördern, und einer offenen Position, in der die Klappe die Förderung eines Gegenstands auf dem Förderer unterbricht, um diesen zu einem geeigneten Sortierausgang (4) umzuleiten, wobei die Regel-/Steuereinheit (11) ausgebildet ist zum Laden in einem Speicher einer für eine bestimmte Dicke des umzuleitenden Gegenstands (2) repräsentative Angabe und zum Steuern in Reaktion hierauf der Verschwenkung der Klappe in eine geöffnete Position gemäß einer bestimmten Öffnungsamplitude, die in Funktion der Dickenangabe des umzuleitenden Gegenstands bestimmt ist,
**dadurch gekennzeichnet,**
**dass** der Sortierförderer wenigstens einen an jeder Klappe (7) angeschlossenen Zahnriemen (13) umfasst, um diese um eine Rotationsachse (A1) schwenken zu lassen, wobei der Riemen durch einen von der Regel-/Steuereinheit (11) gelenkten Motor (14) in Rotation angetrieben ist.

2. Sortierförderer (6) mit schwenkbaren Klappen (7) nach Anspruch 1,
**dadurch gekennzeichnet, dass** wenigstens eine Klappe (7a) in Bezug auf die Förderrichtung (D1) stromaufwärts und nach oben schwenkbar ist.

3. Sortierförderer (6) mit schwenkbaren Klappen (7) nach Anspruch 1,
**dadurch gekennzeichnet, dass** wenigstens eine Klappe (7b) in Bezug auf die Förderrichtung (D1) stromabwärts und nach unten schwenkbar ist.

4. Sortierförderer (6) mit schwenkbaren Klappen (7) nach den Ansprüchen 2 und 3, **dadurch gekennzeichnet, dass**, in Bezug auf die Förderrichtung (D1), eine stromabwärts und nach unten schwenkbare Klappe (7b) stromaufwärts und benachbart zu einer stromaufwärts und nach oben schwenkbaren Klappe (7a) angeordnet ist, und dass die Regel-/Steuereinheit (11) ausgebildet ist zum Steuern der simultanen Verschwenkung der zwei Klappen (7a, 7b) zwischen den geöffneten und geschlossenen Positionen.

5. Sortierförderer (6) mit schwenkbaren Klappen (7) nach einem der vorhergehenden Ansprüche, **dadurch gekennzeichnet, dass** jede Klappe ein mit für die Gegenstände (2) rutschfestem Material beschichtetes Laufband (10) umfasst.

6. Sortierförderer (6) mit schwenkbaren Klappen (7) nach einem der vorhergehenden Ansprüche, **dadurch gekennzeichnet, dass** die Öffnungsamplitude einer Klappe (7) in geöffneter Position zwischen 5° und 30°umfasst ist.

7. Sortiereinrichtung (1), umfassend einen Versorgungseingang (3) für Gegenstände (2) und Sortierausgänge, in denen die Gegenstände sortiert werden, **dadurch gekennzeichnet, dass** sie ferner einen Sortierförderer (6) mit schwenkbaren Klappen (7) nach einem beliebigen der vorhergehenden Ansprüche umfasst, um die Gegenstände (2) von dem Versorgungseingang bis zu den sachgerechten Sortierausgängen in Serie abzulegen.

8. Sortiereinrichtung nach Anspruch 7, **dadurch gekennzeichnet, dass** sie einen stromaufwärts der Klappen (7) angeordneten Sensor (12) zum Messen der Dicke der Gegenstände (2) umfasst.

## Claims

1. A sorting conveyor (6) having pivotally mounted flaps (7) for sorting articles (2) of the postal parcel type into sorting outlets (4) as a function of a sorting indication affixed to each of said articles, said conveyor including a monitoring and control unit (11) designed to cause each flap (7) to pivot between a closed position in which the flap forms a conveyor portion suitable for conveying an article in a certain conveying direction (D1) and an open position in which the flap interrupts conveying of an article on said conveyor to deflect it towards an appropriate sorting outlet (4), said monitoring and control unit (11) being arranged to retrieve thickness data from a memory giving a certain thickness for said article (2) to be deflected, and to respond by causing the flap to pivot into an open position through a certain opening amplitude determined as a function of said thickness data about the article that is to be deflected, said sorting conveyor being **characterized in that** it includes at least one cog belt (13) fastened to each flap (7) so as to cause it to pivot about a pivot axis (A1), said cog belt being driven in rotation by a motor (14) controlled by the monitoring and control unit (11).

2. A sorting conveyor (6) having pivotally mounted flaps (7) according to claim 1, **characterized in that** at least one flap (7a) is mounted to pivot such that its upstream end pivots upwards, relative to said conveying direction (D1).

3. A sorting conveyor (6) having pivotally mounted flaps (7) according to claim 1, **characterized in that** at least one flap (7b) is mounted to pivot such that its downstream end pivots downwards, relative to said conveying direction (D1).

4. A sorting conveyor (6) having pivotally mounted flaps (7) according to claim 2 or claim 3, **characterized in that** a flap (7b) mounted to pivot such that its downstream end pivots downwards is disposed upstream from and adjacent to a flap (7a) mounted to pivot such that its upstream end pivots upwards, relative to said conveying direction (D1), and **in that** said monitoring and control unit (11) is designed to cause both flaps (7a, 7b) to pivot simultaneously between the open and closed positions.

5. A sorting conveyor (6) having pivotally mounted flaps (7) according to any preceding claim, **characterized in that** each flap has a conveyor belt (10) coated with a material procuring grip for the articles (2).

6. A sorting conveyor (6) having pivotally mounted flaps (7) according to any preceding claim, **characterized in that** the opening amplitude of a flap (7) in the open position lies in the range 5° to 30°.

7. A sorting installation (1) including a feed inlet (3) via which articles (2) are fed in, and sorting outlets (4) into which said articles are sorted, said sorting installation being **characterized in that** it further includes a sorting conveyor (6) having pivotally mounted flaps (7) according to any preceding claim for conveying said articles (2) in series and flat from the feed inlet to the appropriate sorting outlets.

8. A sorting installation according to claim 7, **characterized in that** it includes a sensor (12) disposed upstream from said flaps (7) and for measuring the thicknesses of the articles (2) .
